## Europäisches Patentamt
## European Patent Office
## Office européen des brevets

(19)

(11) Publication number: **0 032 457**
**A2**

(12) # EUROPEAN PATENT APPLICATION

(21) Application number: **81300149.2**

(22) Date of filing: **14.01.81**

(51) Int. Cl.³: **B 66 F 9/065**
**B 60 P 1/44**

(30) Priority: **15.01.80 GB 8001331**

(43) Date of publication of application:
**22.07.81 Bulletin 81/29**

(84) Designated Contracting States:
**BE DE FR GB NL**

(71) Applicant: **RATCLIFF TAIL LIFTS LIMITED**
**Bessemer Road**
**Welwyn Garden City Hertfordshire AL7 1ET(GB)**

(72) Inventor: **Brooman, David Henry**
**90 Letchmore Road**
**Stevenage Hertfordshire(GB)**

(74) Representative: **Mayes, Stuart David et al,**
**BOULT, WADE & TENNANT 27 Furnival Street**
**London, EC4A 1PQ(GB)**

(54) Improvements in load lifting and lowering apparatus.

(57) Vehicle mounted load lifting and lowering apparatus comprises a parallel arm linkage (14,16,17) pivotally mounted at one end thereof on part (11) of a vehicle and arranged above the vehicle floor (13). A drop arm (18) is pivotally mounted on and extends below the other end of the parallel arm linkage. A platform (23) is mounted on the drop arm (18) at or adjacent the lower end thereof and is pivotable about a horizontal axis between a load carrying position and a stowed position. A ram (19) is expandable and contractable to rotate the parallel arm linkage between the first position in which the platform lies at ground level, a second position in which the platform is supported at the level of the vehicle floor and a third position in which, with the platform in the stowed position, the apparatus is stowed above the vehicle floor.

FIG. 2.

EP 0 032 457 A2

## IMPROVEMENTS IN LOAD LIFTING AND LOWERING APPARATUS

The invention relates to load lifting and lowering apparatus.

According to the invention there is provided vehicle-mounted load lifting and lowering apparatus comprising a parallel arm linkage pivotally mounted at one end thereof on the vehicle and arranged above the vehicle floor, a drop arm pivotally mounted on and extending below the other end of the parallel arm linkage, a platform mounted on the drop arm at or adjacent the lower end thereof and pivotable about a horizontal axis between a load carrying position and a stowed position, and means for moving the parallel arm linkage between a first position in which the platform lies at ground level, a second position in which the platform is supported at the level of the vehicle floor and a third position in which, with the platform in the stowed position, the apparatus is stowed above the vehicle floor.

The drop arm preferably extends below the

-2-

other end of the parallel arm linkage substantially perpendicularly to the vehicle floor.

The means for moving the parallel arm linkage preferably comprises a hydraulic ram pivotally mounted at one end on the vehicle and at the other end on one of the parallel arms.

The platform may be rectangular and the drop arm preferably provides support for the platform along that edge thereof nearest the vehicle. The drop arm preferably lies at one corner of the platform, and a support member preferably extends perpendicular to the drop arm to support the platform along the edge thereof nearest the vehicle.

Means may be provided for locking the platform in the stowed position when the parallel arm linkage is in the third position. The locking means may comprise latch means mounted on the platform which engages an abutment on the drop arm, and there are preferably means accessible from inside or outside the vehicle for releasing the latch.

The apparatus may comprise a bridge plate for bridging a gap between the platform the vehicle floor when the parallel arm linkage is in the second position. The bridge plate may be pivotally mounted on the platform and movable between a raised position in which the bridge plate extends upwardly from the platform to provide a stop along that edge of the platform adjacent to vehicle, and a bridging position in which the bridge plate lies perpendicular to the drop arm for bridging the gap between the platform and the vehicle floor when the parallel arm linkage is in the second position. Handle means remote from the bridge plate and means connecting the handle to the bridge plate may be provided for allowing the bridge plate to be moved between the raised and bridging positions by movement of the handle. The mounting of the bridge plate preferably comprises safety release means for allowing the bridge plate to fall parallel to the platform from said raised position when a force above a predetermined level is exerted on the bridge plate in a direction away from the vehicle.

Stop means may be mounted along or adjacent to the edge of the platform remote from the vehicle for preventing loads from falling from the platform in use. The stop means may be movable between an operating position and a stowed position.

Pressure detecting means may be arranged between the platform and the vehicle and means responsive to the pressure detecting means may be provided for preventing movement of the apparatus when a pressure above a predetermined level is detected by the pressure detecting means. The pressure detecting means may comprise a gas filled strip connected to a gas pressure sensitive switch.

There may be cover means for enclosing the parallel arm linkage.

Means may be provided for preventing movement of the parallel arm linkage to the third position when the platform is in the load carrying position.

Means may be provided for preventing movement of the parallel arm linkage when the bridge plate is in the raised position.

Means may be provided for urging the parallel arm linkage from the third position towards the second position.

There may be two parallel arm linkage and drop arm assemblies, one on each side of the platform.

By way of example, one embodiment of vehicle mounted load lifting and lowering apparatus according to the invention will now be described with reference to the accompanying drawings, in which:-

Figure 1 is a prospective view of vehicle mounted load lifting and lowering apparatus;

Figure 2 is a side view of part of the apparatus of Figure 1 with the platform at ground level;

Figure 3 is a view from the rear of the apparatus of Figure 1 in a stowed position;

Figure 4 shows the linkage for raising and lowering the bridge plate;

Figure 5 is a side view of the end of the platform remote from the vehicle;

Figure 6 is a plan view of the end of the platform shown in Figure 5; and

Figure 7 is a view of the hand rail mounting.

Load lifting and lowering apparatus generally indicated at 10 is pivotably mounted on a support bracket 11 secured to a vehicle 12. The support bracket 11 is secured to the vehicle floor 13 and reinforced by a support strut 14 secured to the vehicle floor 13 and to the vehicle roof (not shown).

A pair of parallel arms 15,16 are pivotably mounted at one end on the support bracket 11, and an angled portion 17 of a drop arm 18 is pivotably mounted on the respective other ends of the parallel arms 15,16. The parallel arms 15 and 16 and the angled portion 17 of the drop arm 18 form a parallel linkage which maintains the drop arm 18 substantially perpendicular to the vehicle floor 13 during movement of the parallel arm linkage.

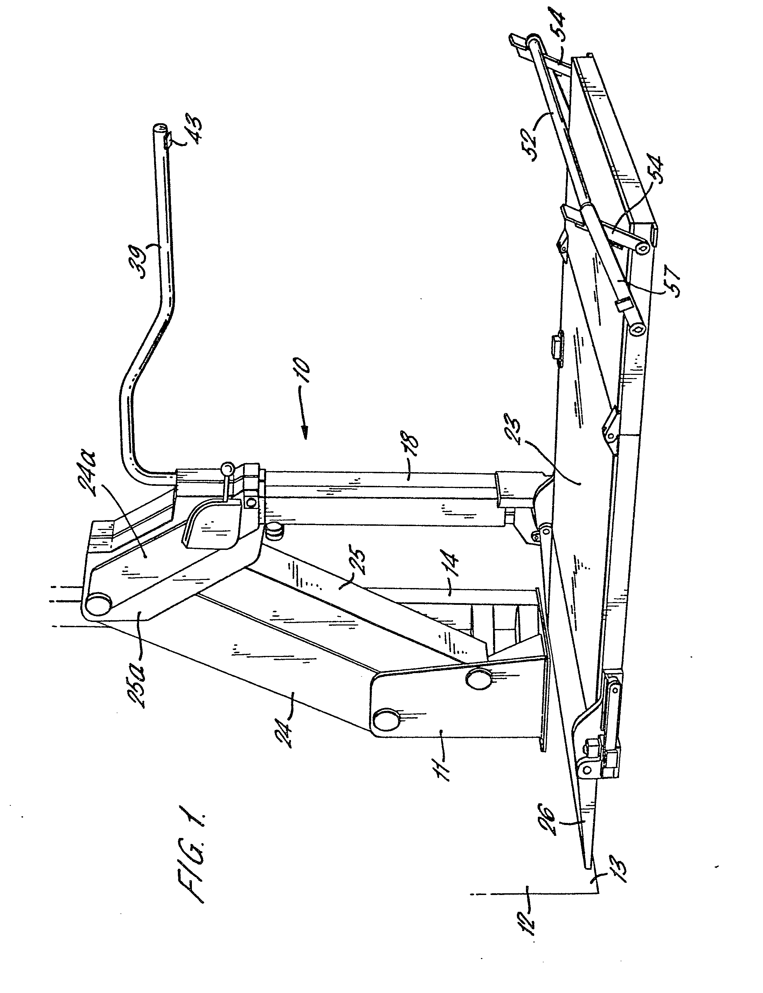

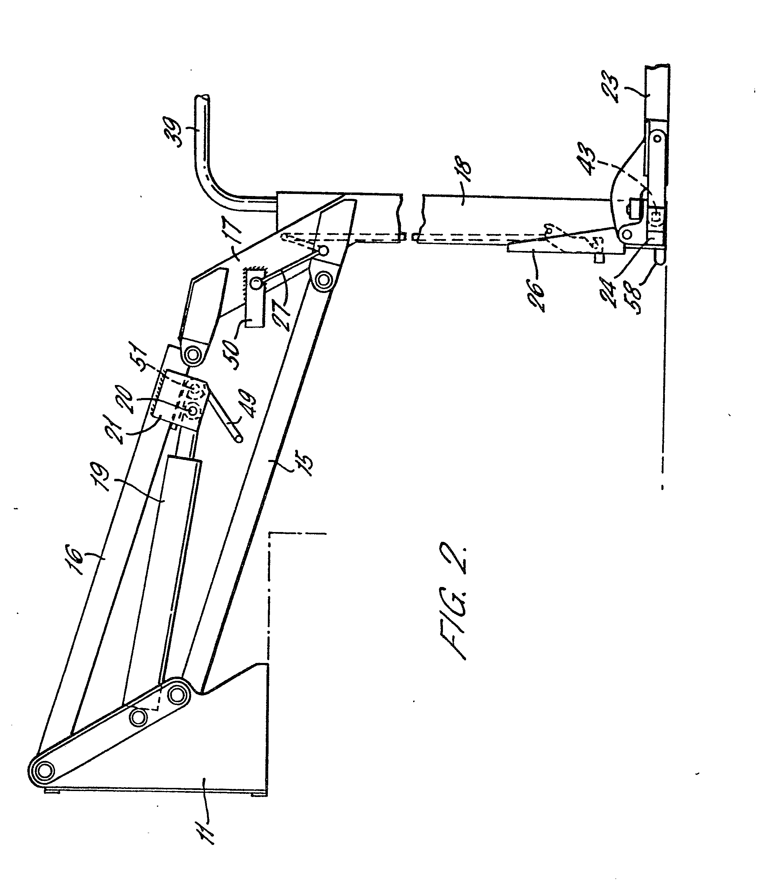

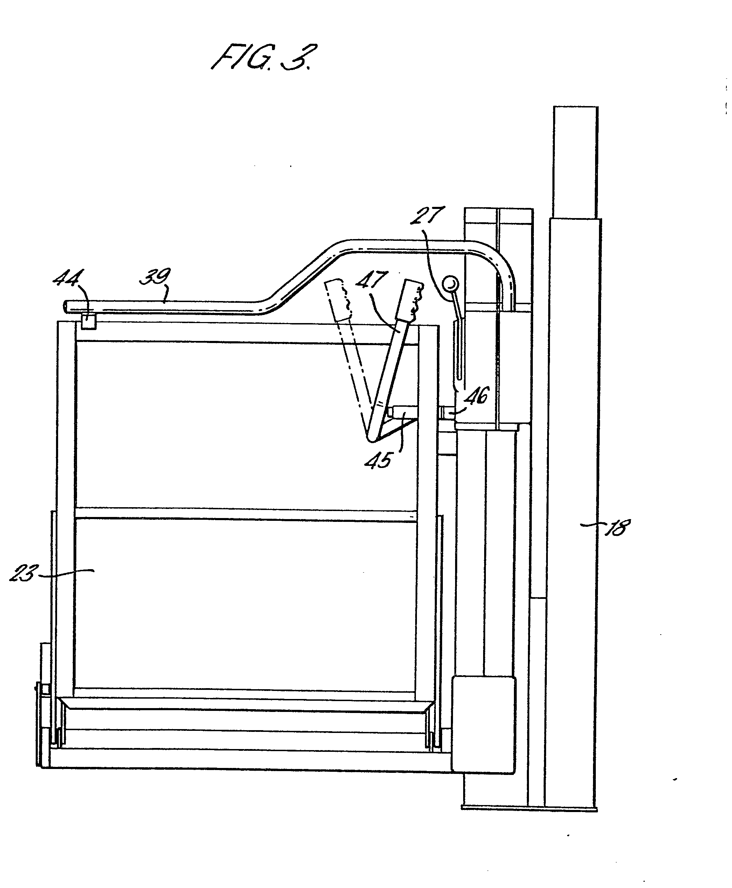

A hydraulic ram 19 is pivotably mounted at one end on the support bracket 11 and at the other end on a pin 20 supported on a pair of support blocks 21 welded to the upper parallel arm 16. It will be appreciated that extension of the ram 19 causes the drop arm 18 to be raised and contraction of the ram 19 causes the drop arm 18 to be lowered. To the bottom of the drop arm 18 is secured, for example by welding, a horizontal support member 22 on which a platform 23 is pivotably mounted. The platform 23 is movable between a horizontal load carrying position, as shown in Figures 1 and 2, and a vertical stowed position as shown in Figure 3.

As an alternative to a hydraulic ram, an electrically powered screw jack may be used.

As shown in Figure 1, in a complete apparatus, cover plates 24,25 are positioned to protect the parallel arm linkage. The cover plates 24,25 intermesh with the support bracket 11 and end covers 24a and 25a to ensure that the complete linkage is projected.

A bridge plate 26 is pivotably mounted on the support member 22 for rotation about the same axis as the platform 23. The bridge plate is movable between a horizontal position, as shown in Figure 1, for bridging the gap between the platform 23 and the vehicle floor 13 or a vertical position as shown in Figure 2 in which the bridge plate 26 acts as a stop member to prevent loads from falling off that edge of the platform in use.

-7-

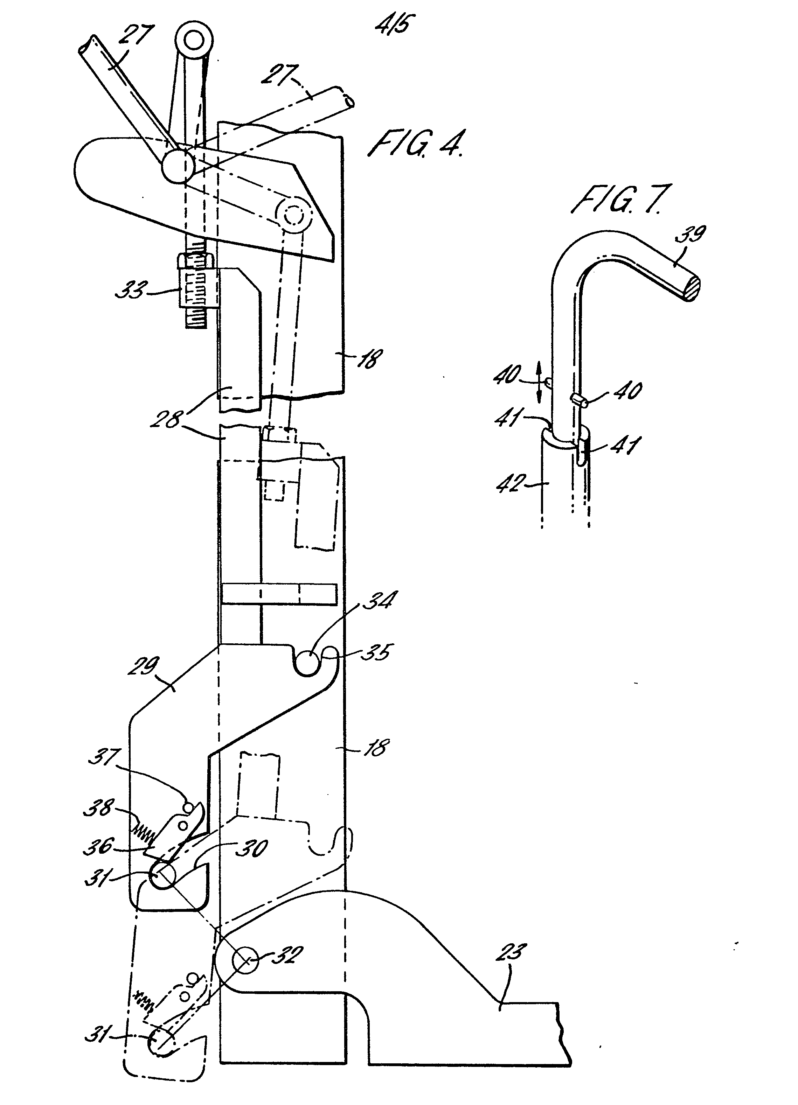

Movement of the bridge plate is controlled by a handle 27 which controls the movement of a rod 28 to which is attached a support member 29 formed with a curve groove 30. The groove 30 supports a pin 31 secured to the bridge plate which pivots about an axis 32 common with the pivot axis of the platform 23. Thus when the handle 27 is rotated in a clockwise direction as shown in Figure 4, the bridge plate is lowered to the horizontal position. The linkage is adjustable by means of a threaded connection 33 at the top of the rod 28. A pin 34 fixed to the drop arm 18 engages a recess 35 in the support member 29. In this way, movement of the bridge plate in an anti-clockwise direction as seen in Figure 4 is prevented when the bridge plate is in a raised position.

In the event of an emergency, it may be necessary to push, for example, wheel chairs out of a vehicle quickly and there may not be time to operate the handle controlling the bridge plate. To deal with such a necessity, a safety release catch 36 is provided. The catch 36 is pivotably mounted on a pin 37 secured to the support member 29 and biased by a spring 38 into the position shown in Figure 4 to hold the pin 31 in the groove 30 in normal circumstances. If, however, a sufficiently large force is exerted on the bridge plate in the direction away from the vehicle,

the bridge plate pin 31 will force the catch to rotate in a clockwise direction as seen in Figure 4 to compress the spring 38 and allow the bridge plate to rotate towards the platform 23 and lie flat along the platform.

A handle 39 for the assistance of people standing on the platform 23 is mounted on a top of the drop arm 18. The handle 39 is held in an operative position (Figures 1 and 2) by means of lugs 40 which drop into slots 41 in a support tube 42. When it is desired to stow the handle 39, the handle may be lifted so that the lugs 40 are removed from the slots 41 and then the handle may be rotated about a vertical axis to lie in the position shown in Figure 3. With the platform 23 in its vertical stowed position, the handle 39 is held in its stowed position by means of a latch plate 43 engaging behind a lug 44 on the platform.

A latch 45 slidably mounted on the platform 23 engages a member 46 on the drop arm when the platform 23 is rotated to its stowed position to lock the platform in the stowed position. To release the platform 23 from the stowed position, the latch 45 may be withdrawn by means of a pivotably mounted handle 47 (Figure 3). The handle 47 is accessible from both inside and outside the vehicle so that in an emergency the platform may be released from its stowed position as soon as possible.

In order to counterbalance the weight of the platform 23, a torsion bar 48 is provided. The torsion bar 48 is engaged at one end in a torsion bar block secured to the horizontal support member 22 and at the other end in a torsion bar block fixed for rotation with the platform 23.

When the angled portion 17 of the drop arm 18 approaches the upper arm 16 of the parallel arm linkage as the linkage moves towards the stowed position, a torsion spring 49 is engaged by blocks 50 secured either side of the angled portion 17. The final stowed position is determined by the abutment of the blocks 50 and the support blocks 21 secured to the upper arm 16. The torsion spring 49 is pivotably mounted on a pin 51 mounted on the two support blocks 21 and the torsion spring 49 serves to urge the apparatus away from the stowed position.

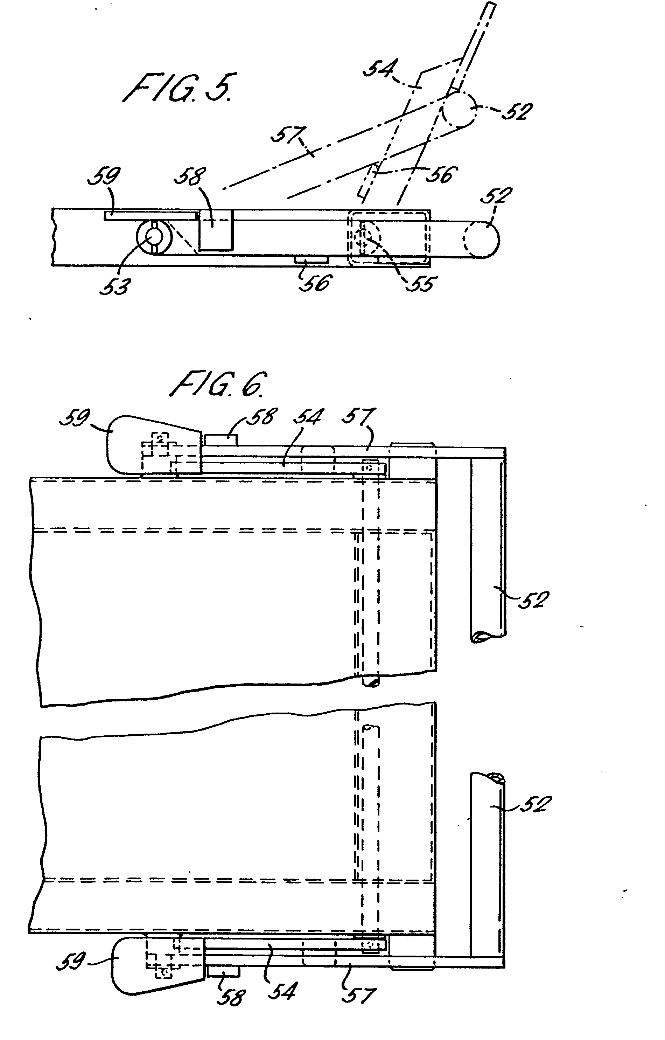

When the platform is in the load carrying position, a stop bar 52 may be manually raised to prevent loads on the platform from falling off. The stop bar 52 is pivotably mounted on the end of the platform 23 to rotate about an axis 53. Levers 54 are pivotably mounted either side of the platform 23 for rotation about a pivot axis 55. Abutment blocks 56 support arms 57 to which the stop bar 52 is secured. Thus it will be appreciated that as the levers 54 are rotated in a clockwise direction from the position shown in full lines in Figure 5 the abutment blocks 56 raise the arms 57 and hence the stop bar 52 to a maximum height and then further rotation in the same direction lowers the bar 52 until the levers 54 contact the stop bar 52. Reverse rotation of the levers 54 folds the stop bar to the position shown in full lines in Figure 5.

A stop block 58 is secured to each arm 57, and each lever 54 has a plate 59 to ease lifting of the levers. The arrangement of the stop blocks 58 and plates 59 is such that the bar 52 cannot be rotated with the levers 54 lying parallel to the platform 23, since the stop blocks 58 will contact the plates 59. This arrangement allows the bar 52 to be used as a handle for rotating the platform.

In operation with the platform 23 in a load carrying position, the parallel arm linkage may be moved between a first position in which the platform is at ground level (Figure 2) and a second position in which the platform 23 is at the height of the vehicle floor 13 (Figure 1). A micro switch prevents
the parallel arm linkage from raising the platform
beyond this second position unless the platform 23
has been rotated into its stowed position. Only
with the platform 23 in the stowed position can the
parallel arm linkage be rotated to a third position
in which the apparatus is stowed above the vehicle floor

A further micro switch ensures that when the
bridge plate is not in the raised position shown
in Figure 2, the lift cannot be raised or lowered.
Thus when the bridge plate is used to bridge the
gap between the platform and the vehicle floor
the parallel arm linkage cannot be moved from the
second position.

A further safety feature is a pneumatic strip
58 which extends along the rear edge of the support
member 22. Compression of the pneumatic strip 58
causes a pressure sensitive switch (not shown)
to be activated and in turn the switch prevents any
movement of the parallel arm linkage In this way
an article or a limb of a person cannot be trapped
between the vehicle and the support member 22.

As an alternative to the described embodiment,
the platform may be pivoted and thereby provide support
for the platform at an edge, at right angles to the
edge of the vehicle.

0032457

-12-

CLAIMS:

1 Vehicle mounted load lifting and lowering apparatus comprising a parallel arm linkage (14,16,17) pivotally mounted at one end thereof on the vehicle and arranged above the vehicle floor (14), a drop arm (18) pivotally mounted on and extending below the other end of the parallel arm linkage, a platform (23) mounted on the drop arm at or adjacent the lower end thereof and pivotable about a horizontal axis between a load carrying position and a stowed position, and means (19) for moving the parallel arm linkage between a first position in which the platform (23) lies at ground level, a second position in which the platform (23) is supported at the level of the vehicle floor (13) and a third position in which, with the platform (23) in the stowed position, the apparatus is stowed above the vehicle floor (13).

2. Apparatus as claimed in Claim 1 characterised in that drop arm (18) provides support for the platform (23) at an edge thereof nearest the vehicle.

3. Apparatus as claimed in Claim 2 characterised in that the platform (23) is rectangular and the drop arm (18) lies at one corner of the platform, a support member (22) extending perpendicular to the drop arm (18) to support the platform (23) at the edge thereof nearest

0032457

-13-

the vehicle.

4. Apparatus as claimed in Claim 1 characterised in that the drop arm (18) provides support for the platform (23) at an edge at right angles to the edge nearest the vehicle.

5. Apparatus as claimed in Claim 4 characterised in that the platform is rectangular and the drop arm lies at one corner of the platform, a support member extending perpendicular to the drop arm to support the platform at the edge thereof at right angles to the edge nearest the vehicle.

6. Apparatus as claimed in any preceding claim characterised in that the drop arm (18) extends below the other end of the parallel arm linkage substantially perpendicularly to the vehicle floor (13).

7. Apparatus as claimed in any preceding claim characterised in that the means for moving the parallel arm linkage comprises a hydraulic ram (19) pivotally mounted at one end on the vehicle and at the other end one one of the parallel arms (16).

8. Apparatus as claimed in any one of Claims 1 to 6 characterised in that the means for moving the the parallel arm linkage comprises an elextrically powered screw jack pivotally mountedat one end on the vehicle and at the other end on one of the parallel arms.

9. Apparatus as claimed in any preceding claims characterised by a bridge plate (26) for bridging a gap between the platform (23) and the vehicle floor (13) when the parallel arm linkage is in the second position.

10. Apparatus as claimed in Claim 9 characterised in that the bridge plate (26) is pivotally mounded on the platform (23) and movable between a raised position in which the bridge plate (26) extends upwardly from the platform (23) to provide a stop along that edge fo the platform (23) adjacent to the vehicle, and a bridging position in which the bridge plate (26) lies perpendicular to the drop arm (18) for bridging the gap between the platform (23) and the vehicle floor (13) when the parallel arm linkage is in the second position.

11. Apparatus as claimed in Claim 10 characterised by handle means remote from the bridge plate and means connecting the handle to the bridge for allowing the bridge plate to be moved between said raised and bridging positions by movement of the handle.

12. Apparatus as claimed in Claim 10 or Claim 11 characterised in that the mounting of the bridge plate (26) comprises safety release means (36) for allowing the bridge plate (26) to fall parallel to the platform (23) from said raised position when a force above a predetermined level is exerted on the bridge plate (26) in a direction away from the vehicle.

13. Apparatus as claimed in any preceding claim characterised by means (45,46) for locking the platform (23) in the stowed position when the parallel arm linkage is in the third position.

14. Apparatus as claimed in Claim 10 characterised in that said locking means comprises latch means (45) mounted on the platform (23) which engages an abutment (46) on the drop arm (18) there being means (47) accessible from inside or outside the vehicle for releasing said latch means (45).

15. Apparatus as claimed in any preceding claim characterised by stop means (52) mounted along or adjacent the edge of the platform (23) remote from the vehicle for preventing loads from falling from the platform (23) in use.

16. Apparatus as claimed in Claim 10 characterised in that said stop means (52) is movable between an operating position and a stowed position.

17. Apparatus as claimed in any preceding claim characterised by pressure detecting means (58) arranged between the platform (23) and the vehicle and means responsive to said pressure detecting means for preventing movement of said apparatus when a pressure above a predetermined level is detected by said pressure detecting means.

18. Apparatus as claimed in Claim 17 characterised in that said pressure detecting means comprises a gas filled strip (58) connected to a gas pressure sensitive switch.

19. Apparatus as claimed in any preceding claim characterised by cover means (24,25) for enclosing said parallel arm linkage.

-17-

20. Apparatus as claimed in any preceding claim characterised by means for preventing movement of the parallel arm linkage to said third position when the platform is in the load carrying position.

21. Apparatus as claimed in any one of Claims 9 10,11 and 12 characterised by means for preventing movement of the parallel arm linkage when the bridge plate (26) is in said raised position.

22. Apparatus as claimed in any preceding claim characterised by means for urging the parallel arm linkage from said third position towards said second position.

23. Apparatus as claimed in any preceding claim characterised by a pair of parallel arm linkage and drop arm assemblies, one assembly on each side of the platform (23).

FIG. 1.

FIG. 2.

FIG. 3.

0032457

FIG. 4.

FIG. 7.

5/5

**FIG. 5.**

**FIG. 6.**